# EUROPÄISCHE PATENTSCHRIFT

(11) **EP 1 323 203 B1**
(45) Veröffentlichungstag und Bekanntmachung des Hinweises auf die Patenterteilung: **15.12.2004**
(21) Anmeldenummer: 01976011.5
(22) Anmeldetag: 03.09.2001
(51) Int. Cl.: H01M 8/04

(54) **BRENNSTOFFZELLENANORDNUNG UND VERFAHREN ZUM BETREIBEN EINER BRENNSTOFFZELLENANORDNUNG**
FUEL CELL ARRANGEMENT AND METHOD FOR OPERATING A FUEL CELL ARRANGEMENT
ENSEMBLE DE PILES A COMBUSTIBLE, ET PROCEDE POUR FAIRE FONCTIONNER UN ENSEMBLE DE PILES A COMBUSTIBLE

(30) Priorität: 15.09.2000 DE 10045700
(43) Veröffentlichungstag der Anmeldung: 02.07.2003
(73) Patentinhaber: SIEMENS AKTIENGESELLSCHAFT, 80333 München (DE)
(72) Erfinder: BETTE, Willi, 91056 Erlangen (DE); MATTEJAT, Arno, 91088 Bubenreuth (DE)
(86) Internationale Anmeldenummer: PCT/DE2001/003366
(87) Internationale Veröffentlichungsnummer: WO 2002/023657

(56) Entgegenhaltungen:
- US-A- 3 748 180
- PATENT ABSTRACTS OF JAPAN vol. 1995, no. 10, 30. November 1995 (1995-11-30) -& JP 07 183042 A (KANSAI ELECTRIC POWER CO INC:THE;OTHERS: 02), 21. Juli 1995 (1995-07-21)
- PATENT ABSTRACTS OF JAPAN vol. 015, no. 183 (E-1065), 10. Mai 1991 (1991-05-10) -& JP 03 043964 A (HITACHI LTD), 25. Februar 1991 (1991-02-25)
- PATENT ABSTRACTS OF JAPAN vol. 011, no. 036 (E-477), 3. Februar 1987 (1987-02-03) -& JP 61 203575 A (HITACHI LTD), 9. September 1986 (1986-09-09)
- PATENT ABSTRACTS OF JAPAN vol. 010, no. 293 (E-443), 4. Oktober 1986 (1986-10-04) -& JP 61 110967 A (SANYO ELECTRIC CO LTD), 29. Mai 1986 (1986-05-29)
- PATENT ABSTRACTS OF JAPAN vol. 009, no. 075 (E-306), 4. April 1985 (1985-04-04) -& JP 59 209279 A (MATSUSHITA DENKI SANGYO KK), 27. November 1984 (1984-11-27)

## Beschreibung

Die Erfindung bezieht sich auf eine Brennstoffzellenanordnung mit einer Anzahl von in einem Schutzgehäuse angeordneten Brennstoffzellen. Sie betrifft weiter ein Verfahren zum Betreiben einer derartige Brennstoffzellenanordnung.

Brennstoffzellen können zur umweltfreundlichen Erzeugung von Elektrizität dienen. In einer Brennstoffzelle läuft nämlich ein Prozeß ab, der im wesentlichen eine Umkehrung der Elektrolyse darstellt. In einer Brennstoffzelle wird dafür ein Wasserstoff aufweisender Brennstoff einer Anode und ein Sauerstoff aufweisender Hilfsstoff einer Kathode zugeleitet. Anode und Kathode sind dabei elektrisch über eine Elektrolytschicht voneinander getrennt, wobei die Elektrolytschicht zwar einen Ionenaustausch zwischen dem Brennstoff und dem Sauerstoff zuläßt, ansonsten aber eine gasdichte Trennung von Brennstoff und Hilfsstoff sicherstellt. Infolge des Ionenaustauschs kann im Brennstoff enthaltener Wasserstoff mit dem Sauerstoff zu Wasser reagieren, wobei sich an der brennstoffseitigen Elektrode oder Anode Elektronen anreichern und an der oxydationsmittelseitigen Elektrode oder Kathode Elektronen aufgenommen werden. Somit baut sich beim Betrieb der Brennstoffzelle eine nutzbare Potentialdifferenz oder Spannung zwischen Anode und Kathode auf, wobei als Abfallprodukt aus dem Elektrizitätserzeugungsprozeß lediglich Wasser anfällt. Die Elektrolytschicht, die bei einer Hochtemperatur-Brennstoffzelle als keramischer Festelektrolyt oder bei einer Niedertemperatur-Brennstoffzelle als Polymer-Membran ausgebildet sein kann, hat somit die Funktion, die Reaktanten voneinander zu trennen, die Ladung in Form von Ionen zu überführen und einen Elektronenkurzschluß zu verhindern.

Aufgrund der elektrochemischen Potentiale der üblicherweise eingesetzten Stoffe kann in einer derartigen Brennstoffzelle unter normalen Betriebsbedingungen eine Elektrodenspannung von etwa 0,6 bis 1,0 V aufgebaut und während des Betriebs aufrechterhalten werden. Für technische Anwendungen, in denen abhängig vom Einsatzzweck oder der geplanten Belastung eine wesentlich höhere Gesamtspannung gefordert sein kann, sind daher üblicherweise eine Mehrzahl von Brennstoffzellen in der Art eines Brennstoffzellenstapels derart elektrisch in Reihe geschaltet, daß die Summe der von den Brennstoffzellen jeweils gelieferten Elektrodenspannungen der geforderten Gesamtspannung entspricht oder diese übersteigt. Je nach geforderter Gesamtspannung kann die Anzahl der Brennstoffzellen in einem derartigen Brennstoffzellenstapel beispielsweise 50 oder mehr betragen.

In einer Brennstoffzellenanordnung kann eine Brennstoffzelle oder eine Anzahl von derart zu einem Brennstoffzellenstapel zusammengeschalteten Brennstoffzellen zum Schutz vor mechanischen Beschädigungen und/oder vor Umwelteinflüssen wie beispielsweise Spritzwasser oder Schmutz in ein Schutzgehäuse eingebaut sein. Ein derartiges Schutzgehäuse umschließt dabei üblicherweise seinen Innenraum gas- und/oder wasserdicht, wobei die Brennstoffzelle bzw. die zu einem Brennstoffzellenstapel zusammengefaßten Brennstoffzellen im Innenraum des Schutzgehäuses angeordnet sind.

Der Erfindung liegt die Aufgabe zugrunde, eine Brennstoffzellenanordnung mit einer Anzahl von in einem Schutzgehäuse angeordneten Brennstoffzellen anzugeben, die bei hoher betrieblicher Zuverlässigkeit eine besonders lange Haltbarkeit aufweist. Zudem soll ein besonders geeignetes Verfahren zum Betreiben einer derartigen Brennstoffzellenanordnung angegeben werden.

Bezüglich der Brennstoffzellenanordnung wird diese Aufgabe erfindungsgemäß gelöst, indem der vom Schutzgehäuse umschlossene Innenraum gasseitig in einen geschlossenen Umwälzkreis geschaltet ist und in dem in den Umwälzkreis eine Trockungstufe zur Entfernung wasserhaltiger Bestandteile aus einem in den Umwälzkreis geführten Gasstrom geschaltet ist.

Die Erfindung geht dabei von der Überlegung aus, daß für eine besonders lange Haltbarkeit der Brennstoffzellenanordnung die im Innenraum des Schutzgehäuses angeordneten Brennstoffzellen möglichst weitgehend von ihre betriebliche Zuverlässigkeit nachteilig beeinflussenden Einwirkungen freigehalten sein sollten. Gerade bei einer Mehrzahl von in einem gemeinsamen Schutzgehäuse angeordneten Brennstoffzellen liegen jedoch vergleichsweise viele Anschlüsse und Zuführleitungen vor, über die der jeweiligen Brennstoffzelle Betriebsstoffe zugeführt werden. Auch wenn diese Zuführung mit hochwirksamen Dichtungen versehen sind, so kann doch infolge von Beschädigungen oder Alterungsprozessen eine Leckage auftreten, die beispielsweise zum Eindringen von Wasser oder eines Gemisches aus Brennstoff und Sauerstoff enthaltendem Hilfsstoff in den vom Schutzgehäuse umschlossenen Innenraum führen kann. Dadurch können die darin angeordneten Brennstoffzellen einer die Haltbarkeit nachteilig beeinflussenden Beeinträchtigung durch Korrosion ausgesetzt sein, oder es kann sich ein zündfähiges, explosives Gemisch aus molekularem Wasserstoff und molekularem Sauerstoff bilden. Bei sich ansammelnder Feuchtigkeit im Inneren des Schutzgehäuses kann zudem eine Verschlechterung der Isolierwirkung von Isolationsstoffen oder sogar ein Kurzschluß auftreten. Zur Vermeidung derartiger die Haltbarkeit der Brennstoffzellenanordnung nachteilig beeinflussender Faktoren sollte die Atmosphäre im Innenraum des Schutzbehälters regelmäßig ausgetauscht und/oder von den die Haltbarkeit der Brennstoffzelle nachteilig beeinflussenden Komponenten befreit werden. Um dabei eine Abgabe der Atmosphäre an die Umwelt zu vermeiden, erfolgt der Austausch der Atmosphäre durch Umwälzung in einem Umwälzkreis.

Zur zuverlässigen Beseitigung der die Haltbarkeit der Brennstoffzellen nachteilig beeinflussenden Komponenten aus der Atmosphäre ist in den Umwälzkreis vorteilhafterweise eine Anzahl von Gasreinigungselementen geschaltet. Dabei können insbesondere Filterelemente vorgesehen sein, die hinsichtlich ihrer chemischen Reaktanz spezifisch auf die Entfernung als besonders störend empfundener Komponenten aus dem im Umwälzkreis geführten Gasstrom ausgelegt sind.

Als besonders problematisch für die Atmosphäre im Innenraum des Schutzgehäuses könnte darin vorhandenes Wasser anzusehen sein. Dieses könnte nämlich einerseits zu Korrosion an den Brennstoffzellen selber und an den diese bespeisenden Zuführungssystemen führen und somit mögliche Leckagen als Fehlerquellen noch vergrößern. Andererseits könnte in der Atmosphäre des Innenraums enthaltenes Wasser aber auch Auswirkungen auf die Leitfähigkeit der Atmosphäre haben und somit die Sicherheit der Brennstoffzellenanordnung im Hinblick auf einzuhaltende Isolationsvorgaben beeinträchtigen. In besonders vorteilhafter Ausgestaltung ist die Brennstoffzellenanordnung somit für eine zuverlässige Entfernung möglicher Wasserbestandteile aus dem im Umwälzkreis geführten Gasstrom ausgelegt. Dazu ist in den Umwälzkreis zweckmäßigerweise eine Trocknungsstufe geschaltet.

Für eine besonders einfache Bedienbarkeit ist in weiterer vorteilhafter Ausgestaltung an die Trocknungsstufe ein Wasserspeicher angeschlossen. In diesem kann das während des Betriebs der Brennstoffzellenanordnung über die Umwälzung der Atmosphäre im Umwälzkreis abgezogene Wasser phasenweise zwischengespeichert werden, so daß eine Entsorgung lediglich während ohnehin vorgesehener Wartungsarbeiten, beispielsweise nach Ablauf eines vorgebbaren Wartungsintervalls, erforderlich ist. Die Entfernung wasserhaltiger Bestandteile aus dem im Umwälzkreise geführten Gasstrom kann über in der Art eines Filters in den Umwälzkreis geschaltetes Bindemittel als Trocknungsstufe erfolgen. Vorteilhafterweise ist die Trocknungsstufe jedoch als während des Betriebs der Brennstoffzellenanordnung aktiv manipulierbares Element ausgebildet, bei dem bedarfsabhängig oder abhängig vom jeweiligen Betriebszustand der Brennstoffzellenanordnung eine angepaßte Trocknung des im Umwälzkreis geführten Gasstroms vorgenommen werden kann. Dazu ist vorteilhafterweise als Trocknungsstufe ein Kondensator vorgesehen.

Für eine besonders einfache Manipulierbarkeit während des Betriebs der Brennstoffzellenanordnung ist der Kondensator in seiner Wirksamkeit zweckmäßigerweise über elektrische Signale einstellbar. Dazu ist der Kondensator vorzugsweise über eine Anzahl von Peltier-Elemten kühlbar.

Eine dauerhafte, besonders hohe Betriebssicherheit für die Brennstoffzellenanordnung ist erreichbar, indem konsequent die Bildung eines zündfähigen Gemisches aus molekularem Wasserstoff und molekularem Sauerstoff im Innenraum des Schutzgehäuses unterbunden ist. Dazu sind vorteilhafterweise in den Umwälzkreis Mittel zur Entfernung von molekularem Wasserstoff und/oder molekularem Sauerstoff aus dem im Umwälzkreis geführten Gasstrom geschaltet. Dazu kann zweckmäßigerweise eine Anzahl von Reaktoren vorgesehen sein, in denen eine Bindung von molekularem Wasserstoff und/oder von molekularem Sauerstoff erfolgt. Der oder jeder zur Bindung von Sauerstoff vorgesehene Reaktor ist dabei als sogenannter Getter ausgebildet und umfaßt chemisch aktive Verbindungen wie beispielsweise Kupfer oder Zink die in aufgeheizten Zustand bevorzugt mit molekularem Sauerstoff reagieren.

In alternativer vorteilhafter Ausgestaltung ist zur Vermeidung der Bildung eines zündfähigen Gemisches aus molekularem Wasserstoff und molekularem Sauerstoff im Innenraum des Schutzgehäuses eine kontrollierte Rekombination des Wasserstoffs mit dem Sauerstoff zu Wasser vorgesehen. Dazu ist vorteilhafterweise in den Umwälzkreis eine Anzahl von katalytischen Rekombinatoren zur Umsetzung von molekularem Sauerstoff mit molekularem Wasserstoff zu Wasser geschaltet. Um eine an sich unerwünschte Beladung der Atmosphäre des Innenraums des Schutzgehäuses mit dem bei dieser Rekombination entstehenden Wasser sicher zu vermeiden, ist dem oder jedem Rekombinator im Umwälzkreis dabei vorteilhafterweise eine Trocknungsstufe, beispielsweise der oben genannten Art, nachgeschaltet.

Bezüglich des Verfahrens zum Betreiben einer Brennstoffzellenanordnung wird die genannte Aufgabe gelöst, indem im Innenraum des Schutzgehäuses befindliches Gas über den Umwälzkreis umgewälzt und dabei getrocknet und/oder gereinigt wird.

Die mit der Erfindung erzielten Vorteile bestehen insbesondere darin, daß durch die Umwälzung der den Innenraum des Schutzgehäuses ausfüllenden Atmosphäre in einem geschlossenen Umwälzkreis eine zuverlässige und dauerhafte Reinhaltung dieser Atmosphäre ermöglicht ist. Insbesondere kann durch die Trocknungsmittel im Umwälzkreis der Wassergehalt der Atmosphäre des Innenraums auch bei möglicherweise auftretenden geringfügigen Leckagen beispielsweise bei der Zuführung von Brenn- oder Hilfsstoffen zu den Brennstoffzellen auf einem vergleichsweise niedrigen Niveau gehalten werden, so daß eine verstärkte Korrosion der im Innenraum des Schutzgehäuses angeordneten Bauteile nicht stattfindet. Des weiteren kann durch Mittel zum Entfernen molekularen Wasserstoffs und/oder molekularen Sauerstoffs aus dem im Umwälzkreis geführten Gasstroms die Bildung eines explosiven, zündfähigen Gemischs im Innenraum des Schutzbehälters sicher vermieden werden. Die derartig ausgebildete Brennstoffzellenanordnung weist somit eine besonderes lange Haltbarkeit bei hoher betrieblicher Zuverlässigkeit auf.

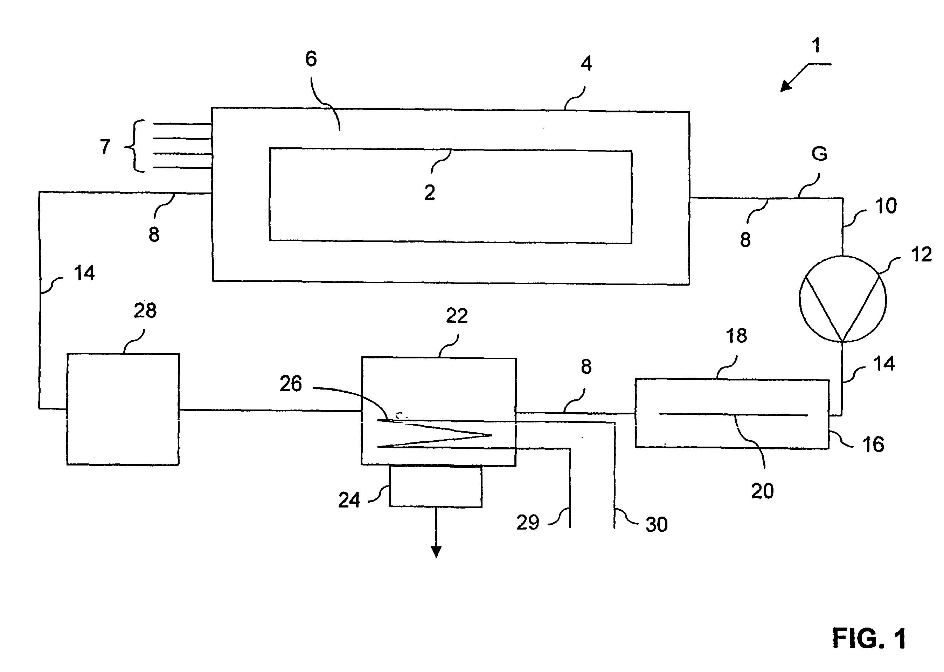

Ein Ausführungsbeispiel der Erfindung wird anhand einer Zeichnung näher erläutert. Darin zeigt die Figur schematisch eine Brennstoffzellenanordnung.

Die Brennstoffzellenanordnung 1 gemäß der Figur umfaßt eine Vielzahl von Brennstoffzellen, die zu einem schematisch dargestellten Brennstoffzellenblock 2 zusammengeschaltet sind. Jede Brennstoffzelle umfaßt dabei jeweils eine Anode und eine Kathode als Elektrodenpaar, wobei über ein nicht näher dargestelltes Zuleitungssystem der Anode ein Wasserstoff aufweisender Brennstoff und der Kathode eine Sauerstoff aufweisender Hilfsstoff zuführbar sind. Anode und Kathode jeder Brennstoffzelle sind dabei elektrisch über eine Elektrolytschicht voneinander getrennt, die zwar Brennstoff und Hilfsstoff gasdicht voneinander trennt, aber einen Ionenaustausch zwischen dem Brennstoff und dem Sauerstoff zuläßt.

Infolge dieses Ionenaustauschs stellt sich an der jeweiligen Brennstoffzelle eine Elektrodenspannung ein, die zwischen 0,6 und 1,0 V beträgt. Zur Erzeugung einer abhängig vom vorgesehenen Einsatzzweck vorgegebenen Auslegungsspannung sind die Brennstoffzellen im Brennstoffzellenblock 2 derart elektrisch in Reihe geschaltet, daß die Summe ihrer Elektrodenspannungen die geforderte Ausgangsspannung erreicht oder übersteigt.

Zum Schutz vor mechanischen Beschädigungen oder auch vor Umwelteinflüssen wie Spritzwasser und Schmutz ist der Brennstoffzellenblock 2 von einem Schutzgehäuse 4 umgeben. Das Schutzgehäuse 4 weist einen von ihm umschlossenen Innenraum 6 auf, in dem der Brennstoffzellenblock 2 angeordnet ist. Das Schutzgehäuse 4 umgibt den Innenraum 6 und somit auch den darin angeordneten Brennstoffzellenblock 2 im wesentlichen gas- und wasserdicht, wobei durch die Außenwände des Schutzgehäuses 4 die zur Versorgung der Brennstoffzellen des Brennstoffzellenblocks 2 mit Brennstoff und Hilfsstoff erforderlichen Zuführungsleitungen 7 oder Zuströmleitungen sowie elektrische Anschlußleitungen zur Abführung der im Brennstoffzellenblock 2 erzeugten Elektrizität und zur Zuführung von Steuersignalen geführt sind.

Die Brennstoffzellenanordnung 1 ist für eine besonders lange Haltbarkeit bei hoher betrieblicher Zuverlässigkeit ausgelegt. Dazu ist vorgesehen, die den Innenraum 6 ausfüllende Gasatmosphäre vergleichsweise trocken und frei von den im Innenraum 6 angeordneten Brennstoffzellenblock 2 angreifenden Komponenten zu halten. Zwar kann einerseits durch die Durchführung der genannten Versorgungs- und Anschlußleitungen durch die Außenwände des Schutzgehäuses 4 infolge dabei möglicherweise auftretender Leckagen Umgebungsatmosphäre in den Innenraum 6 gelangen. Andererseits ist mit möglichen Leckagen bei der Bespeisung der Brennstoffzellen des Brennstoffzellenblocks 2 selbst zu rechnen, wobei beispielsweise Wasser und/oder Brennstoff und/oder Hilfsstoff in den Innenraum 6 gelangen kann. Dabei kann, insbesondere nach vergleichsweise langer wartungsfreier Betriebsdauer, sich ein gewisser Wassergehalt in der Atmosphäre des Innenraums 6 anreichern, der die Einbauten im Innenraum 6 und insbesondere die Komponenten des Brennstoffzellenblocks 2 erhöhter Korrosion aussetzen könnte und somit deren Haltbarkeit mindert. Zudem kann infolge steigenden Wassergehalts in der Atmosphäre des Innenraums 6 eine Verringerung des erforderlichen Isolationswiderstands oder eine Verschlechterung der Isolationswirkungen von Isolierwirkstoffen auftreten, so daß durch auskondensierendes flüssiges Wasser eventuell auch Kurzschlüsse auftreten könnten. Alternativ oder zusätzlich könnte bei einer Leckage von Brennstoff und Hilfsstoff in den Innenraum 6 hinein ein zündfähiges Gemisch von molekularem Wasserstoff und molekularem Sauerstoff im Innenraum 6 entstehen.

Um diese nachteiligen Beeinträchtigungen der Haltbarkeit und/oder der Betriebssicherheit der Brennstoffzellenanordnung 1 sicher und zuverlässig zu vermeiden, ist der vom Schutzgehäuse 4 umschlossene Innenraum 6 gasseitig in einen geschlossenen Umwälzkreis 8 geschaltet. Zur Bildung des Umwälzkreises 8 ist an den Innenraum 6 eine Abströmleitung 10 angeschlossen, die ausgangsseitig in eine Umwälzpumpe 12 mündet. Die Umwälzpumpe 12 ist ausgangsseitig oder druckseitig an eine Zuströmleitung 14 angeschlossen, in die eine Anzahl von Gasreinigungselementen geschaltet ist. Die Zuströmleitung 14 mündet ausgangsseitig in den Innenraum 6 des Schutzgehäuses 4, so daß ein geschlossener Umwälzkreis 8 entsteht.

Als erstes Gasreinigungselement ist in die Zuströmleitung 14 und somit in den Umwälzkreis 8 ein katalytischer Rekombinator 16 geschaltet. Der katalytische Rekombinator 16 umfaßt dabei ein in einem Gehäuse 18 angeordnetes katalytisches Element 20, über das ein den katalytischen Rekombinator 16 durchströmender Gasstrom G führbar ist. Das katalytische Element 20 weist dabei im Ausführungsbeispiel eine katalytisch aktive Oberflächenschicht auf, die als Katalysatorsubstanz Platin umfaßt. Das katalytisch aktive Element 20 ist somit derart ausgebildet, daß es für den Fall, daß der ihm zugeführte Gasstrom molekularen Wasserstoff und molekularen Sauerstoff umfaßt, diesen in der Art einer Rekombination in Wasser umsetzt. Somit ist durch das katalytisch aktive Element 20 sichergestellt, daß möglicherweise im Gasstrom G enthaltener molekularer Wasserstoff und molekularer Sauerstoff zuverlässig entfernt werden kann, so daß die Bildung eines zündfähigen, explosiven Gemisches sicher vermieden ist. Zur Verbesserung der Umsetzungsrate bei der katalytischen Rekombination kann das katalytisch aktive Element 20 zudem von außen beheizbar ausgebildet sein.

In Strömungsrichtung des im Umwälzkreis 8 geführten Gasstroms G gesehen nach dem katalytischen Rekombinator 16 ist in die Zuströmleitung 14 eine Trocknungsstufe geschaltet. Die Trocknungsstufe ist dabei zur Abscheidung oder Entfernung von Wasser aus dem Gasstrom G ausgebildet. Als Trocknungsstufe könnte dabei ein Behälter vorgesehen sein, in dem geeignete chemische Mittel zur Bindung des im Gasstrom G enthaltenen Wassers vorgehalten sind. Im Ausführungsbeispiel gemäß der Figur ist als Trocknungsstufe jedoch ein Kondensator 22 vorgesehen. Der Kondensator 22 bewirkt dabei in der Art eines Taupunktkühlers durch Wärmetausch mit dem im Umwälzkreis 8 geführten Gasstrom G eine Auskondensation des darin geführten Wasseranteils. Durch Variation der Kühlleistung des Kondensators 22 ist dabei der Wirkungsgrad der Kondensation einstellbar, so daß die Wasserabscheidung im als Trocknungsstufe vorgesehenen Kondensator 22 an die jeweilige Betriebssituation anpaßbar ist. Nach einer Abkühlung und Auskondensation im Kondensator 22 kann eine Wiederaufwärmung des verbleibenden Gasstroms G durch Verlustwärme erfolgen.

An den als Trocknungsstufe vorgesehenen Kondensator 22 ist ein Wasserspeicher 24 angeschlossen, in dem aus dem Gasstrom G abgeschiedenes Wasser über einen längeren Zeitraum gesammelt werden kann. Im Rahmen einer auf regulärer Basis durchgeführten Wartung der Brennstoffzellenanordnung 1 kann das Wasser dann aus dem Wasserspeicher 24 entfernt werden. Somit ist eine kontinuierliche Abführung des aus dem Gasstrom G abgeschiedenen Wassers nicht erforderlich; zwischen den ohnehin vorgesehenen Wartungsintervallen ist somit ein besonders ressourcensparender Betrieb der Brennstoffzellenanordnung 1 ermöglicht.

Der Kondensator 22 kann über Kühlluft oder über eine Anzahl von in seinem Innenraum angeordneten Peltier-Elementen kühlbar sein. Im Ausführungsbeispiel ist der Kondensator 22 jedoch über Kühlwasser kühlbar, das in einer Anzahl von im Innenraum des Kondensators 22 angeordneten Kühlschlangen 26 geführt ist. Deren Kühlleistung ist auf besonders einfache Weise durch den Kühlstrom in den Anschlußleitungen 29, 30 einstellbar.

Hinsichtlich seiner Kühlleistung und seinen sonstigen Betriebsparametern ist der Kondensator 22 derart dimensioniert, daß ausreichend Kapazität zur sicheren Entfernung von durch Leckagen aus dem Brennstoffzellenblock 2 oder dessen Zuströmleitungen in den Innenraum 6 gelangtes Wasser sowie durch katalytische Rekombination im Rekombinator 16 entstandenes Wasser vorhanden ist.

Als weiteres Gasreinigungselement ist in Strömungsrichtung des im Umwälzkreis 8 geführten Gasstroms G gesehen nach dem Kondensator 22 ein Feinfilter 28 in die Zuströmleitung 14 geschaltet. Im Feinfilter 28 sind beispielsweise Staubpartikel oder Restverunreinigungen aus dem Gasstrom G entfernbar.

Beim Betrieb der Brennstoffzellenanordnung 1 wird die im vom Schutzgehäuse 4 umschlossenen Innenraum 6 befindliche Gasatmosphäre kontinuierlich im Umwälzkreis 8 umgewälzt. Dazu wird der Gasstrom G aus dem Innenraum 6 entnommen und mittels der Umwälzpumpe 12 über die als Gasreinigungselemente vorgesehene Komponenten katalytischer Reaktor 16, Kondensator 22 und Feinfilter 28 geführt, bevor er über die Zuströmleitung 14 wieder in den Innenraum 6 eingespeist wird. Auf diese Weise ist eine andauernde Umwälzung der Atmosphäre des Innenraum 6 ermöglicht. Dabei werden unerwünschte Verunreinigungen und besonders für die Haltbarkeit und die Betriebssicherheit der Brennstoffzellenanordnung 1 nachteilige Bestandteile wie insbesondere Wasser und molekularer Wasserstoff aus dem Gasstrom G und somit aus der Atmosphäre aus dem Innenraum 6 entfernt. Somit ist auch bei langer Betriebszeit eine Anreicherung der genannten Stoffe, die wiederum zu Korrosion oder Beeinträchtigung der Funktionsfähigkeit einzelner im Innenraum 6 angeordneter Komponenten führen könnte, ausgeschlossen.

## Patentansprüche

1. Brennstoffzellenanordnung (1) mit einer Anzahl von in einem Schutzgehäuse (4) angeordneten Brennstoffzellen, bei der der vom Schutzgehäuse (4) umschlossene Innenraum (6) gasseitig in einen geschlossenen Umwälzkreis (8) geschaltet ist, **dadurch gekennzeichnet, dass** in den Umwälzkreis (8) eine Trockhungsstufe zur Entfernung wasserhaltiger Bestandteile aus einem in dem Umwälzkreis geführten Gasstrom geschaltet ist.

2. Brennstoffzellenanordnung (1) nach Anspruch 1, in deren Umwälzkreis (8) eine Anzahl von Gasreinigungselementen geschaltet ist.

3. Brennstoffzellenanordnung (1) nach Anspruch 1, an deren Trocknungsstufe ein Wasserspeicher (24) angeschlossen ist.

4. Brennstoffzellenanordnung (1) nach Anspruch 1 oder 3, bei der als Trocknungsstufe ein Kondensator (22) vorgesehen ist.

5. Brennstoffzellenanordnung (1) nach Anspruch 4, bei der der Kondensator (22) über eine Anzahl von Kühlschlangen (26) kühlbar ist.

6. Brennstoffzellenanordnung (1) nach einem der Ansprüche 1 bis 5, in deren Umwälzkreis (8) eine Anzahl von Reaktoren zur Bindung von molekularem Wasserstoff und/oder molekularem Sauerstoff geschaltet ist.

7. Brennstoffzellenanordnung (1) nach einem der Ansprüche 1 bis 6, in deren Umwälzkreis (8) eine Anzahl von katalytischen Rekombinatoren (16) zur Umsetzung von molekularem Sauerstoff mit molekularem Wasserstoff in Wasser geschaltet ist.

8. Brennstoffzellenanordnung (1) nach Anspruch 7, bei der dem oder jedem katalytischen Rekombinator (16) im Umwälzkreis (8) eine Trocknungsstufe nachgeschaltet ist.

9. Verfahren zum Betreiben einer Brennstoffzellenanordnung (1) nach einem der Ansprüche 1 bis 8, bei dem im Innenraum (6) des Schutzgehäuses (4) befindliches Gas über den Umwälzkreis (8) umgewälzt und dabei zur Entfernung wasserhaltiger Bestandteile getrocknet wird.

## Claims

1. Fuel cell arrangement (1), having a number of fuel cells arranged in a protective housing (4), in which arrangement the interior space (6) surrounded by the protective housing (4) is gas-connected into a closed recirculation circuit (8) **characterized in that** a drying stage for removing water-containing constituents from a gas stream which is guided in the recirculation circuit (8) is connected into the recirculation circuit.

2. Fuel cell arrangement (1) according to Claim 1, which has a number of gas-purifying elements connected into its recirculation circuit (8).

3. Fuel cell arrangement (1) according to Claim 1, which has a water reservoir (24) connected to its drying stage.

4. Fuel cell arrangement (1) according to Claim 1 or 3, in which a condenser (22) is provided as the drying stage.

5. Fuel cell arrangement (1) according to Claim 4, in which the condenser (22) can be cooled by a number of cooling coils (26).

6. Fuel cell arrangement (1) according to one of Claims 1 to 5, which have a number of reactors for bonding molecular hydrogen and/or molecular oxygen connected into its recirculation circuit (8).

7. Fuel cell arrangement (1) according to one of Claims 1 to 6, which has a number of catalytic recombiners (16) for reacting molecular oxygen with molecular hydrogen to form water connected into its recirculation circuit (8).

8. Fuel cell arrangement (1) according to Claim 7, in which a drying stage is connected downstream of the or each catalytic recombiner (16) in the recirculation circuit (8).

9. Method for operating the fuel cell arrangement (1) according to one of Claims 1 to 8, in which gas which is located in the interior space (6) in the protective housing (4) is recirculated via the recirculation circuit (8) and is dried in the process in order to remove water-containing constituents.

## Revendications

1. Ensemble de piles à combustible (1) comportant un certain nombre de piles à combustible disposés dans un bottier de protection (4), dans lequel l'espace intérieur (6) enfermé par le boîtier de protection (4) est monté du côté du gaz dans un circuit fermé de circulation, **caractérisé en ce qu'**un étage de séchage est monté dans le circuit de circulation (8) afin d'éliminer des constituants contenant de l'eau d'un courant de gaz passant dans le circuit de circulation.

2. Ensemble de piles à combustible (1) selon la revendication 1, dont le circuit de circulation (8) comporte un certain nombre d'éléments d'épuration de gaz.

3. Ensemble de piles à combustible (1) selon la revendication 1, dont l'étage de séchage est raccordé à un réservoir d'eau (24).

4. Ensemble de piles à combustible (1) selon la revendication 1 ou 3, dans lequel il est prévu un condenseur (22) comme étage de séchage.

5. Ensemble de piles à combustible (1) selon la revendication 4, dans lequel le condenseur (22) peut être refroidi par un certain nombre de serpentin de refroidissement.

6. Ensemble de piles à combustible (1) selon l'une des revendications 1 à 5, dans le circuit de circulation (8) auquel est monté un certain nombre de réacteurs destiné à la liaison de l'hydrogène moléculaire et/ou de l'oxygène moléculaire.

7. Ensemble de piles à combustible (1) selon l'une des revendications 1 à 6, dans le circuit de circulation (8) duquel est monté un certain nombre de dispositifs de recombinaison catalytique (16) destinés à recombiner de l'oxygène moléculaire à de l'hydrogène moléculaire pour donner de l'eau.

8. Ensemble de piles à combustible (1) selon la revendication 7, dans lequel un étage de séchage est monté en aval du ou de chaque dispositif de recombinaison catalytique (16) dans le circuit de circulation (8).

9. Procédé destiné à faire fonctionner un ensemble de piles à combustible (1) selon l'une des revendications 1 à 8, dans lequel du gaz se trouvant dans l'espace intérieur (6) du boîtier de protection (4) est mis en circulation par le circuit de circulation (8) et est séché afin d'éliminer les constituants contenant de l'eau.
